(19) **Europäisches Patentamt / European Patent Office / Office européen des brevets**

(11) **EP 3 387 466 B1**

(12) **EUROPEAN PATENT SPECIFICATION**

(45) Date of publication and mention
of the grant of the patent:
**26.05.2021 Bulletin 2021/21**

(21) Application number: **16873672.6**

(22) Date of filing: **06.12.2016**

(51) Int Cl.:
**G01V 1/36** (2006.01)

(86) International application number:
**PCT/US2016/065139**

(87) International publication number:
**WO 2017/100187 (15.06.2017 Gazette 2017/24)**

(54) **EFFICIENT INTERNAL MULTIPLE PREDICTION METHODS**

VERFAHREN ZUR EFFIZIENTEN PRÄDIKTION INTERNER MEHRFACHREFLEXIONEN

PROCÉDÉS DE PRÉDICTION EFFICACE DE RÉFLEXIONS MULTIPLES INTERNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 US 201562266139 P**

(43) Date of publication of application:
**17.10.2018 Bulletin 2018/42**

(73) Proprietor: **ConocoPhillips Company
Houston, Texas 77079 (US)**

(72) Inventors:
• **ZHANG, Yu
Houston, Texas 77079 (US)**
• **ZHANG, Haiyan
Katy, Texas 77494 (US)**

(74) Representative: **Simpson, Paul Christopher
ConocoPhillips (U.K.) Limited
20th Floor
Angel Court
London EC2R 7HJ (GB)**

(56) References cited:
**WO-A1-2015/082419     US-A1- 2009 092 007**

• **ANTONIO PICA ET AL: "Wave equation based internal multiple modeling in 3D", SEG TECHNICAL PROGRAM EXPANDED ABSTRACTS 2008, 9 November 2008 (2008-11-09), pages 2476-2480, XP055207816, DOI: 10.1190/1.3063858**

• **ALISON E MALCOLM ET AL: "A method for inverse scattering based on the generalized Bremmer coupling series; Inverse multiple scattering", INVERSE PROBLEMS, INSTITUTE OF PHYSICS PUBLISHING, BRISTOL, GB, vol. 21, no. 3, 1 June 2005 (2005-06-01), pages 1137-1167, XP020086280, ISSN: 0266-5611, DOI: 10.1088/0266-5611/21/3/021**

• **ARTHUR B WEGLEIN ET AL: "An inverse-scattering series method for attenuating multiples in seismic reflection data", GEOPHYSICS, SOCIETY OF EXPLORATION GEOPHYSICISTS, US, vol. 62, no. 6, 1 December 1997 (1997-12-01), pages 1975-1989, XP002119983, ISSN: 0016-8033, DOI: 10.1190/1.1444298**

• **HELMUT JAKUBOWICZ ET AL: "Wave equation prediction and removal of interbed multiples", SEG TECHNICAL PROGRAM EXPANDED ABSTRACTS 1998, 1 January 1998 (1998-01-01), pages 1527-1530, XP055148029, DOI: 10.1190/1.1820204**

• **BROGGINI, F.: 'Wave Field Autofocusing and Applications to Multidimensional Deconvolution and Imaging with Internal Multiples.' DISSERTATION, COLORADO SCHOOL OF MINES, [Online] 2013, pages 13 - 47, XP055168735 Retrieved from the Internet: <URL:https://dspace.library.colostate.edu/bitstream/handle/11124/79362/Broggini_mines_0052E_102 18.pdf?sequence=1>**

**Description**

**FIELD OF THE DISCLSOURE**

The present invention generally relates to a system and method for improving seismic images, and more particularly to a system and method for predicting and attenuating internal multiples during seismic image processing.

**BACKGROUND OF THE DISCLOSURE**

During seismic data acquisition, seismic sources generate seismic waves that propagate into the earth. Once underground, a seismic wave can reflect upward when it interacts with a reflector, which causes the seismic wave to return to the free surface where the signal can be detected by a seismic receiver. Seismic data collected at the surface is usually a composite signal that includes signals from primary reflection events as well as multiple reflection events. As used herein, the term "multiple" and its related terms refer to a reflection event in which a propagating seismic wave undergoes at least one downward reflection before reflecting upward to reach a seismic receiver. More particularly, an internal multiple is characterized by at least one downward reflection from a boundary or interface below the free surface with no downward reflection from the free surface. Internal multiples are created by changes in density or velocity of subterranean structure between the surface (earth surface or sea floor) and a target reflector (such as a hydrocarbon layer, fresh water aquifer, and so forth).

Multiples are generally undesirable for seismic imaging and techniques have been developed for attenuating multiples during pre-migration processing. Inverse scattering series is an established multiple attenuation technique that is attractive because of its purely data driven (sub-surface information is not required) approach. Inverse scattering series is powerful because it can be used to predict all internal multiples simultaneously in one run. However, a major drawback is that the computational cost of conventional inverse scattering series is significantly higher than other pre-stack processing and imaging flows. Currently, the computing cost for inverse scattering series is generally considered prohibitive for 3D seismic imaging applications involving real data.

Antonia Pica et al: "Wave equation based internal multiple modelling in 3D. SEG TECHNICAL PROGRAM EXPANDED ABSTRACTS 2008, 9 November 2008 (2008-11-09), pages 2476-2480, describes a method for processing seismic data to attenuate internal multiples which requires a model, i.e. requires a priori knowledge of the subsurface.

Alison E Malcolm et al: "A method for inverse scattering based on the generalized Bremmer coupling series; Inverse multiple scattering", INVERSE PROBLEMS, INSTITUTE OF PHYSICS PUBLISHING, BRISTOL, GB, vol. 21, no. 3, 1 June 2005 (2005-06-01), pages 1137-1167, describes a method for processing seismic data to attenuate internal multiples which employs equations using multiple integrals.

Arthur B Weglein et al: "An inverse-scattering series method for attenuating multiples in seismic reflection data", GEOPHYSICS, SOCIETY OF EXPLORATION GEOPHYSICISTS, US, vol. 62, no. 6, 1 December 1997 (1997-12-01), pages 1975-1989, 2480, also describes a method for processing seismic data to attenuate internal multiples which employs equations using multiple integrals.

**SUMMARY OF THE DISCLOSURE**

According to the invention a method for processing seismic data is provided according to the appended claims.

**BRIEF DESCRIPTION OF THE DRAWINGS**

FIG. 1 illustrates a schematic representation of seismic wave propagating in the subsurface.
FIG. 2A-2C illustrates an embodiment of the invention as described in the Example.
FIG. 3 shows a flow diagram that summarizes an embodiment of the invention.

**DETAILED DESCRIPTION**

Turning now to the detailed description of the preferred arrangement or arrangements of the present invention, it should be understood that the inventive features and concepts may be manifested in other arrangements and that the scope of the invention, which is defined by the appended claims, is not limited to the embodiments described or illustrated.

The following examples of certain embodiments of the invention are given. Each example is provided by way of explanation of the invention, one of many embodiments of the invention, and the following examples should not be read to limit the scope of the invention.

Geoscientists often process acquired seismic data to improve interpretability of the seismic data. Seismic processing includes steps or operations that are intended to remove or attenuate undesirable noise, enhance signal, and the like. Specific examples of seismic processing steps include random noise (e.g., noise caused by weather) attenuation, free surface multiple prediction and attenuation (for offshore data), internal multiple prediction and attenuation, velocity modeling, and imaging/migration.

The present invention provides method and system for efficiently predicting and attenuating internal multiples by utilizing cascaded double-square-root one-way wave equations and proposing a partial differential equation (PDE) based internal multiple prediction method. This new method is mathematically equivalent to conventional inverse scattering series approach. Both the PDE-based approach and conventional ISS method are data-driven approaches that do not require *a priori* knowledge (e.g., location of reflectors, earth model type) of the subsurface. Computationally, the PDE-based approach is much more time efficient without sacrificing power or accuracy. For 2D application, the present invention can speed up internal multiple prediction by a factor of about 50 to 100. For 3D applications, the speed gain is even more dramatic, potentially improving computational efficiency by two orders of magnitudes or greater. Other advantages are apparent from the disclosure herein. "3D" refers to "three-dimensional," or any computer-generated image in which the displayed items have a length, width, and depth.

**Internal Multiple Attenuation** Approach **Using Inverse Scattering Series**

Inverse scattering series is largely based on scattering theory, which is a form of perturbation analysis in which perturbation in properties of a medium is related to perturbation in a wavefield that experiences the medium. The difference between actual and reference media can be characterized by a perturbation operator. The corresponding difference between actual and reference wavefields is referred to as the scattered wavefield. Forward scattering takes the reference medium, reference wavefield, and perturbation operator as inputs and outputs the actual wavefield. Inverse scattering takes the reference medium, reference wavefield, values of the actual field on the measurement surface as inputs and outputs the difference between actual and reference medium properties through the perturbation operator.

The collected seismic data may be processed (e.g., deghosting, free-surface multiple elimination, etc.) prior to undergoing internal multiple attenuation. The inverse scattering series constructs the perturbation operator through the action of applying Green's function operators to the seismic data. A subseries (removal series) of the inverse scattering series can be linearly combined with the seismic data in order to produce seismic data that is largely free of internal multiples. The inverse scattering series for attenuating all internal multiples chooses the leading and most significant contribution from the removal series of each order of multiple (thus forming a series that attenuates rather than fully eliminates). This subseries can be linearly combined with the seismic data to produce seismic data that is largely free of internal multiples. A detailed description of ISS for multiples attenuation can be found in US 5,757,723 (and Weglein et al. 1997 Geophysics)..

Assuming 2-D wave propagation, equation (1) defines a first-order internal multiple attenuation term $b_3$ (portion of the third term of the internal multiple attenuation series) in f-k domain:

$$b_3 = \frac{1}{(2\pi)^2} \int_{-\infty}^{\infty} \int_{-\infty}^{\infty} dk_1 e^{-iq_1(\epsilon_g - \epsilon_s)} dk_2 e^{iq_2(\epsilon_g - \epsilon_s)}$$

$$\times \int_{-\infty}^{\infty} dz_1 e^{i(q_g + q_1)z_1} b_1(k_g, -k_1, z_1)$$

$$\times \int_{-\infty}^{z_1} dz_2 e^{i(-q_1 - q_2)z_2} b_1(k_1, -k_2, z_2)$$

$$\times \int_{z_2}^{\infty} dz_3 e^{i(q_2 + q_s)z_3} b_1(k_2, -k_s, z_3); \quad z_1 > z_2 \; and \; z_2 < z_3 \tag{1}$$

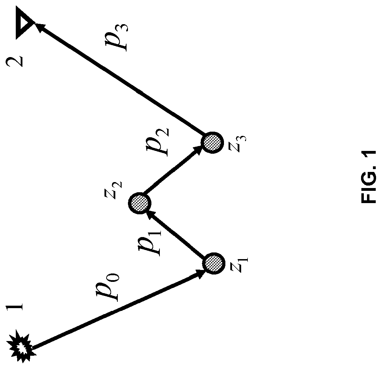

where $k_g$ and $k_s$ are Fourier conjugates of receiver and source coordinates respectively, $\omega$ is the temporal frequency, $q_g$ and $g_s$ are depth wavenumbers, $z_1$, $z_2$, and $z_3$ are the depth of three reflectors which generate the predicted internal multiples (FIG. 1), $b_1$ is the reflectivity model generated by prestack seismic data using Stolt migration, $b_3$ is the predicted internal multiples, $k_1$ and $k_2$ are the wavenumbers from either source side or the receiver side $q_1$, $q_2$ and $q_s$ are the single-square-root propagation operators defined in frequency-wavenumber domain (see equation 3 below) $\varepsilon_g$ - $\varepsilon_s$ are small depth perturbations. Higher-order terms corresponds to higher-order internal multiples.

FIG. 1 illustrates a first-order internal multiple configuration. The seismic source is located at 1 and the seismic receiver is located 2. Both the source and the receiver are located at the free surface.

## PDE Based Internal Multiple Attenuation

The present invention provides a PDE-based internal multiple prediction and attenuation approach. A 2-D acoustic wave equation for upcoming waves in frequency-space domain (neglecting spatial derivatives of velocity) can be written as equation (2):

$$\left(\frac{\partial}{\partial z} - iq\right) p_0(k;\omega;z;x_s) = -\delta(z)e^{ikx_s} \tag{2}$$

where $p_0(k;\omega;z;x_s)$ is Fourier conjugate to field point going from source to reflection at depth $z_1$, $\omega$ is radial frequency, $x_s$ is source coordinates, and $q$ is given by equation (3):

$$q = \frac{\omega}{c}\sqrt{1 - \frac{c^2 k_x^2}{\omega^2}} \tag{3}$$

where c is velocity and $k_x$ is wavenumber, or Fourier conjugate of lateral propagation locations x.

Equation (4) describes 2-D propagation of an acoustic wave from reflector located at $z_1$ to reflector located at $z_2$:

$$\left(\frac{\partial}{\partial z} + iq\right) \hat{p}_1(k;\omega;z;k_s) = \int \hat{b}_1(k;-\vec{k}';z)\hat{p}_0(\vec{k}';\omega;z;k_s)d\vec{k}' \tag{4}$$

where $\hat{p}_0$ is Fourier transform of $p_0$, $\hat{p}_1$ is Fourier transform of $p_1$ which is Fourier conjugate to field point going from $z_1$ to $z_2$, $\hat{b}_1$ is Fourier transform of $b_1$ ($b_1$ is first term of inverse scattering series, constructed by seismic data), $\vec{k}'$ is wave vector directed towards observation point, and $k_s$ is Fourier conjugate of $x_s$.

Equation (5) describes propagation of the acoustic wave from reflector located at $z_2$ to reflector at $z_3$:

$$\left(\frac{\partial}{\partial z} - iq\right) \hat{p}_2(k;\omega;z;k_s) = -\int \hat{b}_1(k;-\vec{k}';z)\hat{p}_1(\vec{k}';\omega;z;k_s)d\vec{k}' \tag{5}$$

where $\hat{p}_2$ is Fourier transform of $p_2$ which is Fourier conjugate to field point going from $z_2$ to $z_3$.

Partial differential equation (6) describes propagation of the acoustic wave from reflector located at $z_3$ to receiver 2:

$$\left(\frac{\partial}{\partial z} + iq_g\right) \hat{p}_3(k_g;\omega;z;k_s) = \int \hat{b}_1(k_g;-\vec{k}';z)\hat{p}_2(\vec{k}';\omega;z;k_s)d\vec{k}' \tag{6}$$

where $\hat{p}_3$ is Fourier transform of $p_3$ which is Fourier conjugate to field point going from $z_3$ to receiver 2, $q_g$ is depth wavenumbers.

Solving for $\hat{p}_3$ where z = 0 results in equation (7),

$$\hat{p}_3(k_g;\omega;z=0;k_s) =$$

$$\int_0^\infty \int_{-\infty}^\infty e^{i(q_g+q_2)z_3} \int_0^{z_3} \int_{-\infty}^\infty e^{-i(q_2+q_1)z_2} \int_{z_2}^\infty e^{i(q_1+q_s)z_1} \hat{b}_1(k_1;k_s;z_1)dz_1 \hat{b}_1(k_2;-k_1;z_2)dk_1 dz_2 \hat{b}_1(k_g;-k_2;z_3)dk_2 dz_3$$

$$(7)$$

Equation (7) is equivalent to $b_3$, which is defined by equation (1). The new approach solves three wave equations (4, 5 and 6) sequentially. Solving each equation requires 4 computational loops over $\omega$, z and two $k_s$. Altogether, only at most 4 integration loops ($p1, p2, p3, \omega$) is required. Solving equation (7) at z = 0 provides predicted internal multiples. The predicted internal multiples may be outputted on any suitable medium (e.g., computer screen, printout, mobile devices, etc.)

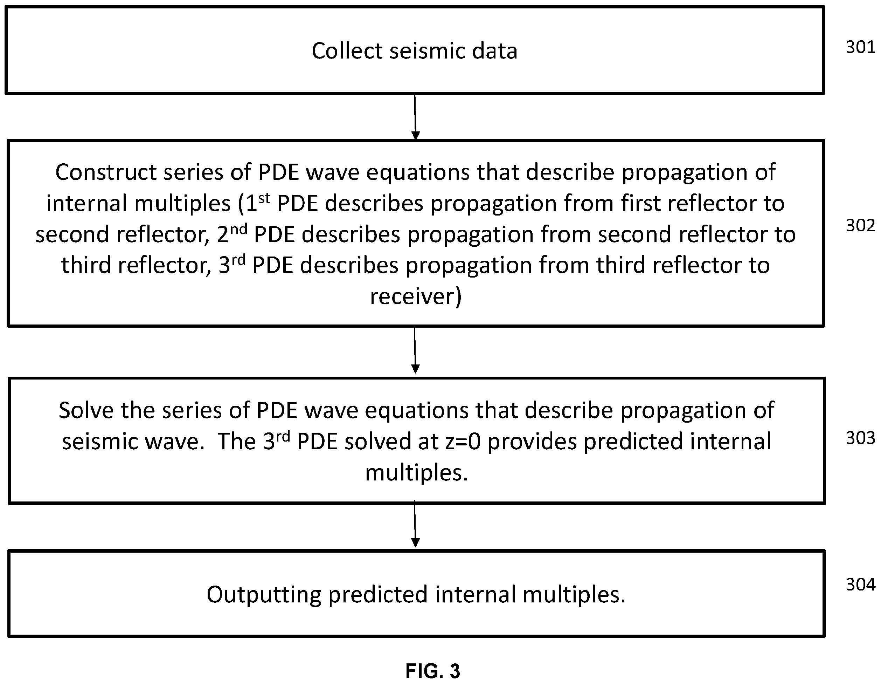

FIG. 3 illustrates an embodiment of the present invention in a flow diagram. First step 301 involves collecting or obtaining seismic data. Typically, this seismic data will be a composite that includes contribution from internal multiples. This seismic data can be used to construct $b_1$, the first term of inverse scattering series. In the next step 302, a series of PDE wave equations can be constructed. Each PDE wave equation describes a reflected portion of the predicted internal multiples. In step 303, the series of PDE wave equations are solved. Each PDE wave equations solves a term that can be utilized to solve later PDE wave equation(s). The third PDE wave equation solved at z=0 provides predicted internal multiples. In the last step 304, the predicted internal multiples are outputted. The predicted internal multiples may be outputted on any suitable medium (e.g., computer screen, printout, mobile devices, etc.)

## EXAMPLE

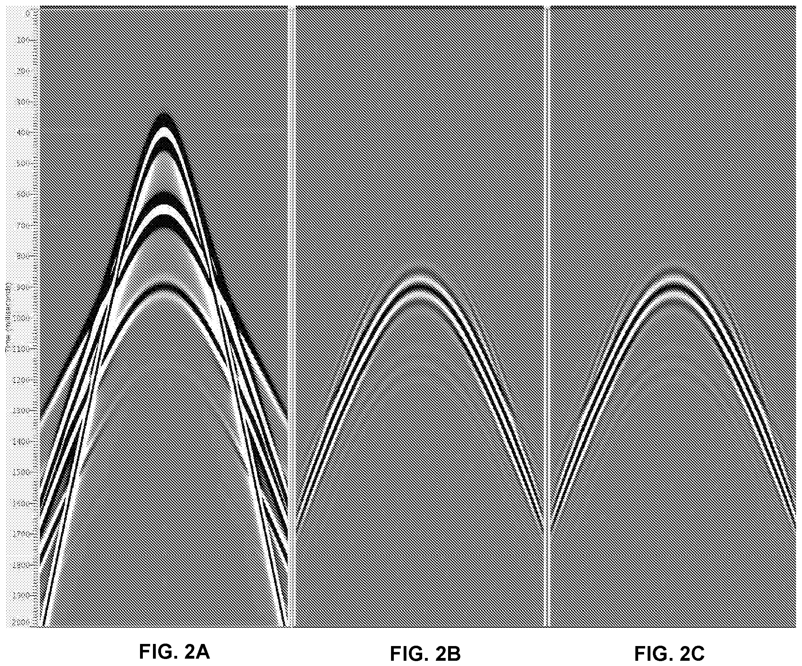

Internal multiple prediction was performed on a 2-D synthetic data using method of the present invention and conventional inverse scattering series. The synthetic dataset contained 641 shots with 12.5m shot interval and 12.5m receiver interval. Sampling rate was 4ms and trace length was 2s. FIG. 2A illustrates a single shot record as the input seismic data for the multiple prediction, which includes both primary and the internal multiples. FIG. 2B shows the predicted internal multiples of the same shot record using PDE-based approach. FIG. 2C shows the predicted internal multiples of the same shot record using the conventional inverse scattering series approach. The two methods provide almost identical internal multiple predictions. However, the PDE-based approach took ~17 minutes while conventional inverse scattering series approach took ~28 hours. The speedup ratio of the present invention on this dataset is about 99 times. This ratio is expected to be more dramatic for 3D datasets. The use of computers is essential to process the seismic data quickly and effectively.

The foregoing patent application is directed to particular embodiments of the present invention for the purpose of illustrating it. It will be apparent, however, to one skilled in the art, that many modifications and variations to the embodiments described herein are possible without departing from the scope of the present invention, as defined in the appended claims. Persons skilled in the art will readily recognize that in practical applications of the invention, at least some of the steps in the present inventive method are performed on or with the aid of a computer, i.e. the invention is computer implemented.

A suitable computer or computer system may be in communication with disk storage devices such as an external hard disk storage devices or conventional hard disk drives. These storage drives/devices can be implemented by way of a local area network or by remote access. The storage device may be used to store any and all of the program instructions, measurement data, and results as desired.

In one implementation, data may be stored in disk storage device. The system computer may retrieve the appropriate data from the disk storage devices to process data according to program instructions that correspond to implementations of various techniques described herein. The program instructions may be written in a computer programming language, such as C++, Java and the like. The program instructions may be stored in a computer-readable medium, such as program disk storage device. Such computer-readable media may include computer storage media. Computer storage media may include volatile and non-volatile, and removable and non-removable media implemented in any method or technology for storage of information, such as computer-readable instructions, data structures, program modules or other data. Computer storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the system computer. Combinations of any of the above may also be included within the scope of computer readable media. In one implementation, the system computer may present output primarily onto graphics display, or alternatively via printer.

## Claims

1. A method for processing seismic data comprising:

   a) using seismic sources to generate seismic waves that propagate into the earth;
   b) obtaining seismic data by detecting with a seismic receiver the signal from reflected seismic waves; and

c) processing, in a computer, the seismic data to generate a prediction of internal multiples at the receiver location and outputting predicted internal multiples for attenuation; **characterized by**:

d) generating internal multiples by solving a series of partial differential wave equations, wherein a first partial differential wave equation describes propagation of a seismic wave going from a first reflector to a second reflector, wherein a second partial differential wave equation describes propagation of a seismic wave going from the second reflector to a third reflector, and wherein a third partial differential wave equation describes propagation of a seismic wave going from the third reflector to a seismic receiver; wherein the first partial

$$\left(\frac{\partial}{\partial z}+iq\right)\hat{p}_1(k;\omega;z;k_s)=\int \hat{b}_1(k;-\vec{k}';z)\hat{p}_0(\vec{k}';\omega;z;k_s)d\vec{k}' ,$$

differential equation is wherein z is depth between $z_1$ and $z_2$, $\hat{p}_0$ is Fourier transform of $p_0$ which is Fourier conjugate to field point going from source to the reflections above depth $z_1$, $\hat{p}_1$ is Fourier transform of $p_1$ which is Fourier conjugate to field point going from $z_1$ to $z_2$, $b_1$ is Fourier transform of $b_1$ ,$b_1$ is first term of inverse scattering series, $\vec{k}'$ is wave vector directed towards observation point, and $k_s$ is Fourier conjugate of $x_s$, $\omega$ is radial frequency, $k_s$ is Fourier conjugate of $x_s$

$$q=\frac{\omega}{c}\sqrt{1-\frac{c^2 k_x^2}{\omega^2}}$$

which is source coordinates, and wherein c is velocity and $k_x$ is wavenumber.

2. The method of claim 1, wherein the series of partial differential wave equations are solved sequentially.

3. The method of claim 1, wherein at least one of the series of partial differential wave equations describes 2-D or 3-D propagation of the seismic wave.

4. The method of claim 1, wherein the second partial differential equation is

$$\left(\frac{\partial}{\partial z}-iq\right)\hat{p}_2(k;\omega;z;k_s)=-\int \hat{b}_1(k;-\vec{k}';z)\hat{p}_1(\vec{k}';\omega;z;k_s)d\vec{k}' ,$$

wherein $\hat{p}_2$ is Fourier transform of $p_2$ which is Fourier conjugate to field point going from $z_2$ to $z_3$.

5. The method of claim 1, wherein the third partial differential equation is

$$\left(\frac{\partial}{\partial z}+iq_g\right)\hat{p}_3(k_g;\omega;z;k_s)=\int \hat{b}_1(k_g;-\vec{k}';z)\hat{p}_2(\vec{k}';\omega;z;k_s)d\vec{k}' ,$$

wherein $\hat{p}_3$ is Fourier transform of $p_3$ which is Fourier conjugate to field point going from $z_3$ to the seismic receiver, $q_g$ is depth wavenumbers, and $k_g$ is Fourier conjugate of $x_g$ which is receiver coordinates.

**Patentansprüche**

1. Verfahren zum Verarbeiten seismischer Daten, umfassend:

   a) Verwenden seismischer Quellen, um seismische Wellen zu erzeugen, die sich in die Erde ausbreiten;
   b) Erhalten seismischer Daten, indem mit einem seismischen Empfänger das Signal reflektierter seismischer Wellen detektiert wird; und
   c) Verarbeiten, in einem Computer, der seismischen Daten, um eine Vorhersage interner Vielfacher bei dem Empfängerstandort zu erzeugen, und Ausgeben vorhergesagter interner Vielfacher zur Dämpfung; **gekennzeichnet durch**:
   d) Erzeugen von internen Vielfachen, indem eine Reihe teilweiser Differenzialwellengleichungen gelöst wird, wobei eine erste Teildifferenzialwellengleichung Ausbreitung einer seismischen Welle beschreibt, die von einem ersten Reflektor zu einem zweiten Reflektor geht, wobei eine zweite Teildifferenzialwellengleichung Ausbreitung einer seismischen Welle beschreibt, die von dem zweiten Reflektor zu einem dritten Reflektor geht, und wobei eine dritte Teildifferenzialwellengleichung Ausbreitung einer seismischen Welle beschreibt, die von dem dritten Reflektor zu einem seismischen Empfänger geht;

wobei die erste Teildifferenzialgleichung ist

$$\left(\frac{\partial}{\partial z} + iq\right)\hat{p}_1(k;\omega;z;k_s) = \int \hat{b}_1\left(k;-\vec{k}';z\right)\hat{p}_0\left(\vec{k}';\omega;z;k_s\right)d\vec{k}',$$

wobei z die Tiefe zwischen $z_1$ und $z_2$ ist, $\hat{p}_0$ eine Fourier-Transformation von $p_0$ ist, die ein Fourier-Konjugat zum Feldpunkt ist, der von einer Quelle der Reflexionen über Tiefe $z_1$ geht, $\hat{p}_1$ eine Fourier-Transformation von $p_1$ ist, das ein Fourier-Konjugat zum Feldpunkt ist, der von $z_1$ zu $z_2$ geht, $b_1$ eine Fourier-Transformation von $b_1$ ist, $b_1$ ein erster Ausdruck von umgekehrten Streuungsreihen ist, $\vec{k}'$ ein Wellenvektor ist, der zum Beobachtungspunkt gerichtet ist, und $k_s$ ein Fourier-Konjugat von $x_s$ ist, $\omega$ eine Radialfrequenz ist, $k_s$ ein Fourier-Konjugat von $x_s$ ist, das Quellkoordinaten

$$q = \frac{\omega}{c}\sqrt{1 - \frac{c^2 k_x^2}{\omega^2}},$$

sind, und wobei c Geschwindigkeit ist und $k_x$ eine Wellenzahl ist.

2. Verfahren nach Anspruch 1, wobei die Reihe von Teildifferenzialwellengleichungen aufeinanderfolgend gelöst wird.

3. Verfahren nach Anspruch 1, wobei mindestens eine der Reihen von Teildifferenzialwellengleichungen 2-D oder 3-D-Ausbreitung der seismischen Welle beschreibt.

4. Verfahren nach Anspruch 1, wobei die zweite Teildifferenzialgleichung $\left(\frac{\partial}{\partial z} - iq\right)\hat{p}_2(k;\omega;z;k_s)=-\int\hat{b}_1(k;-\vec{k}';z)\hat{p}_1(\vec{k}';\omega;z;k_s)d\vec{k}'$ ist, wobei $\hat{p}_2$ eine Fourier-Transformation von $p_1$ ist, das ein Fourier-Konjugat zum Feldpunkt ist, der von $z_2$ zu $z_3$ geht.

5. Verfahren nach Anspruch 1, wobei die dritte Teildifferenzialgleichung $\left(\frac{\partial}{\partial z} + iq_g\right)\hat{p}_3(k_g;\omega;z;k_s) = \int\hat{b}_1(k_g;-\vec{k}';z)\hat{p}_2(\vec{k}';\omega;z;k_s)\,d\vec{k}'$ ist, wobei $\hat{p}_3$ eine Fourier-Transformation von $p_1$ ist, das ein Fourier-Konjugat zum Feldpunkt ist, der von $z_3$ zu dem seismischen Empfänger geht, $q_g$ Tiefenwellenzahlen sind und $k_g$ ein Fourier-Konjugat von $x_g$ ist, das Empfängerkoordinaten sind.

**Revendications**

1. Procédé de traitement de données sismiques comprenant :

   a) l'utilisation de sources sismiques pour générer des ondes sismiques qui se propagent dans la terre ;
   b) l'obtention de données sismiques en détectant à l'aide d'un récepteur sismique le signal provenant d'ondes sismiques réfléchies ; et
   c) le traitement, dans un ordinateur, des données sismiques pour générer une prédiction de multiples internes au niveau de l'emplacement de récepteur et la sortie de multiples internes prédits pour atténuation ;
   *caractérisé par :*
   d) la génération de multiples internes en résolvant une série d'équations d'onde différentielles partielles, dans lequel une première équation d'onde différentielle partielle décrit la propagation d'une onde sismique allant d'un premier réflecteur à un deuxième réflecteur, dans lequel une deuxième équation d'onde différentielle partielle décrit la propagation d'une onde sismique allant du deuxième réflecteur à un troisième réflecteur, et dans lequel une troisième équation d'onde différentielle partielle décrit la propagation d'une onde sismique allant du troisième réflecteur à un récepteur sismique ;
   dans lequel la première équation d'onde différentielle partielle est

$$\left(\frac{\partial}{\partial z} + iq\right)\hat{p}_1(k;\omega;z;k_s) = \int \hat{b}_1(k;-\vec{k}';z)\hat{p}_0(\vec{k}';\omega;z;k_s)d\vec{k}'$$

   , dans laquelle z est la profondeur entre $z_1$ et $z_2$, $\hat{p}_0$ est la transformée de Fourier de $p_0$ qui est le conjugué de Fourier jusqu'au point de champ allant de la source aux réflexions au-dessus de la profondeur $z_1$, $\hat{p}_1$ est la transformée de Fourier de $p_1$ qui est le conjugué de Fourier jusqu'au point de champ allant de $z_1$ à $z_2$, $b_1$ est la transformée de Fourier de $b_1$, $b_1$ est le premier

terme d'une série de diffusions inverses, $\vec{k}'$ est un vecteur d'onde dirigé vers un point d'observation, et $k_s$ est le conjugué de Fourier de $x_s$, $\omega$ est la fréquence radiale, $k_s$ est le conjugué de Fourier de $x_s$ qui est les coordonnées

$$q = \frac{\omega}{c}\sqrt{1 - \frac{c^2 k_x^2}{\omega^2}}$$

de source, et $\qquad$ dans laquelle c est la vitesse et $k_x$ est un nombre d'onde.

**2.** Procédé selon la revendication 1, dans lequel la série d'équations d'onde différentielles partielles sont résolues de manière séquentielle.

**3.** Procédé selon la revendication 1, dans lequel au moins une de la série d'équations d'onde différentielles partielles décrit une propagation 2-D ou 3-D de l'onde sismique.

**4.** Procédé selon la revendication 1, dans lequel la deuxième équation différentielle partielle est

$$\left(\frac{\partial}{\partial z} - iq\right)\hat{p}_2(k;\omega;z;k_s) = -\int \hat{b}_1(k;-\vec{k}';z)\hat{p}_1(\vec{k}';\omega;z;k_s)d\vec{k}'$$

, dans laquelle $\hat{p}_2$ est la transformée de Fourier de $p_2$ qui est le conjugué de Fourier jusqu'au point de champ allant de $z_2$ à $z_3$.

**5.** Procédé selon la revendication 1, dans lequel la troisième équation différentielle partielle est

$$\left(\frac{\partial}{\partial z} + iq_g\right)\hat{p}_3(k_g;\omega;z;k_s) = \int \hat{b}_1(k_g;-\vec{k}';z)\hat{p}_2(\vec{k}';\omega;z;k_s)d\vec{k}'$$

, dans laquelle $\hat{p}_3$ est la transformée de Fourier de $p_3$ qui est le conjugué de Fourier jusqu'au point de champ allant de $z_3$ au récepteur sismique, $q_g$ est les nombres d'onde de profondeur, et $k_g$ est le conjugué de Fourier de $x_g$ qui est les coordonnées de récepteur.

FIG. 1

FIG. 2A          FIG. 2B          FIG. 2C

EP 3 387 466 B1

```
┌─────────────────────────────────────────────────────────────────┐
│                                                                   │
│                    Collect seismic data                           │  301
│                                                                   │
└─────────────────────────────────────────────────────────────────┘
                                │
                                ▼
┌─────────────────────────────────────────────────────────────────┐
│  Construct series of PDE wave equations that describe propagation of │
│  internal multiples (1st PDE describes propagation from first reflector to │  302
│  second reflector, 2nd PDE describes propagation from second reflector to │
│  third reflector, 3rd PDE describes propagation from third reflector to │
│                          receiver)                                │
└─────────────────────────────────────────────────────────────────┘
                                │
                                ▼
┌─────────────────────────────────────────────────────────────────┐
│  Solve the series of PDE wave equations that describe propagation of │
│  seismic wave.  The 3rd PDE solved at z=0 provides predicted internal │  303
│                          multiples.                               │
└─────────────────────────────────────────────────────────────────┘
                                │
                                ▼
┌─────────────────────────────────────────────────────────────────┐
│                                                                   │  304
│           Outputting predicted internal multiples.                │
└─────────────────────────────────────────────────────────────────┘
```

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5757723 A

### Non-patent literature cited in the description

- **ANTONIA PICA et al.** Wave equation based internal multiple modelling in 3D. *SEG TECHNICAL PROGRAM EXPANDED ABSTRACTS 2008,* 09 November 2008, 2476-2480
- A method for inverse scattering based on the generalized Bremmer coupling series; Inverse multiple scattering. **ALISON E MALCOLM et al.** INVERSE PROBLEMS. INSTITUTE OF PHYSICS PUBLISHING, 01 June 2005, vol. 21, 1137-1167
- **ARTHUR B WEGLEIN et al.** An inverse-scattering series method for attenuating multiples in seismic reflection data. *GEOPHYSICS, SOCIETY OF EXPLORATION GEOPHYSICISTS,* 01 December 1997, vol. 62 (6), 1975-1989, 2480
- **WEGLEIN et al.** *Geophysics,* 1997